# EUROPÄISCHE PATENTSCHRIFT

(11) **EP 0 482 145 B1**
(45) Veröffentlichungstag und Bekanntmachung des Hinweises auf die Patenterteilung: **16.04.1997**
(21) Anmeldenummer: 91907847.7
(22) Anmeldetag: 07.05.1991
(51) Int. Cl.: B01J 19/32, B01D 53/56, B01F 5/06, B01J 12/00, B01J 15/00

(54) **KATALYSATORANORDNUNG IN EINER KOLONNE**
CATALYST ASSEMBLY WITHIN A COLUMN
DISPOSITIF CATALYSEUR DANS UNE COLONNE

(30) Priorität: 08.05.1990 CH 1563/90
(43) Veröffentlichungstag der Anmeldung: 29.04.1992
(73) Patentinhaber: Sulzer Chemtech AG, CH-8404 Winterthur (CH)
(72) Erfinder: STREIFF, Felix, CH-8400 Winterthur (CH)
(74) Vertreter: Heubeck, Bernhard
(86) Internationale Anmeldenummer: CH9100109
(87) Internationale Veröffentlichungsnummer: WO9116970

(56) Entgegenhaltungen:
- DE-A- 3 705 476
- FR-A- 2 227 041
- FR-A- 2 336 164
- GB-A- 149 676
- US-A- 3 582 048

## Beschreibung

Die Erfindung betrifft eine Katalysatoranordnung in einer Kolonne sowie eine Rauchgasentstickungsanlage und eine Lage einer Katalysatoranordnung.

Aus der DE-A 3 705 476 ist eine Kolonnenpackung bekannt, die aus stranggeformten keramischen Grundelementen aufgebaut ist. Mehrere aufeinander gestapelte, horizontale Lagen von dicht angeordneten Grundelementen bilden die Packung. Das Grundelement weist eine Vielzahl von parallelen Kanälen auf, die gegenüber den Lagen einen geneigten Verlauf haben. Die US-A 3 582 048 offenbart einen statischen Mischer mit in Serie angeordneten Mischerelementen, zwischen denen einbautenfreie Mischräume, sogenannte "Übergangsbereiche", vorgesehen sind. Die Mischerelemente sind pfropfenförmig und weisen jeweils eine Mehrzahl von geneigt angeordneten Durchtrittskanälen auf. Die Kanäle bilden Engpässe, deren Gesamtquerschnitt wesentlich kleiner als der Querschnitt der Mischräume ist.

In statischen Mischern bekannter Bauart sind die Mischelemente in den Mischkolonnen so angeordnet, dass eine möglichst homogene Mischung des Fliess- oder Mischgutes erreicht wird. Das Mischgut kann aus gasförmigen, flüssigen, festen oder einem Gemisch solcher Komponenten bestehen, wobei es sich auch um verschiedene Phasen/Aggregatszustände eines einzelnen Stoffs oder einzelner Stoffe, die durchmischt weden sollen, handeln kann. Es sind Mischelemente verschiedenster Formen bekannt und auch solche, die gleichzeitig als Kühl- oder Heizelemente dienen.

Statische Mischer werden auch verwendet, um Komponenten, die miteinander zur Reaktion gebracht werden, zu mischen, um z.B. eine möglichst gleichförmige und/oder möglichst vollständige Reaktion der Reaktanden zu erreichen. Ziel jeder Anordnung und Ausbildung von Mischelementen soll es immer sein, bei relativ niedrigem Strömungswiderstand in der Hauptrichtung oder Flussrichtung der Kolonne bzw. des Mischers, einen relativ hoher Mischungsgrad der Komponenten zu erreichen.

Die Mischwirkung bisheriger statischer Mischeranordnungen beruht auf der äusseren Form bzw. Kontur der einzelnen Mischelemente und deren gegenseitigen Anordnung. Solche Anordnungen weisen oft noch zu hohe Strömungswiderstandwerte auf, die nur zulasten schlechteren Durchmischens der Komponenten weiter vermindert werden könnten.

Aufgabe der Erfindung ist es, eine Katalysatoranordnung für eine Kolonne zu schaffen, die neben einem geringen Strömungswiderstand eine gute Mischwirkung für die Reaktanden aufweist. Diese Aufgabe wird durch die in Anspruch 1 definierte Anordnung gelöst. Die abhängigen Ansprüche beziehen sich auf vorteilhafte Weiterbildungen des Erfindungsgegenstands. Die Ansprüche 13 und 14 haben eine Rauchgasentstickungsanlage beziehungsweise eine Lage einer Kolonne zum Gegenstand.

Durch die abwechselnd zur Hauptströmungsrichtung geneigen Kanalelemente, werden Teilströme über den Querschnitt hin und her verlagert und dadurch grob vermischt. In den Bereichen des Übergangs von den Kanalelementen in den Kolonnenraum wird die Mischwirkung durch zusätzliche Turbulenzen und die Vereinigung der verschiedenen Teilströme angeregt. Bei der Anordnung mehrerer aufeinanderfolgender, aus Katalysatormonolythen bestehender Kanalelemente in der Kolonne, trägt insbesondere das wiederholte Ein- und Austreten des Fliessgutes in die Kanäle und die Vereinigung der Ströme im Kolonnenraum zu einer Verbesserung der Mischung der Reaktanden bei. Darüberhinaus wird durch die Verlängerung des Strömungswegs, durch die Neigung der Kanalelemente, durch die erhöhte Turbulenz die Ausnützung des Katalysators bzw. der Umsatz verbessert. Letztlich trägt dies alles zum verbesserten Ablauf der katalytischen Reaktion und zu einer Verminderung des Schlupfs der Reaktanden (z.B. NH₃-Schlupf in Denox-Katalysatoren) bei.

Die Kanalelemente - im folgenden wird von Katalysatormischelementen oder lediglich von Elementen gesprochen - können in Schichten oder Lagen angeordnet sein. Benachbarte Elemente innerhalb einer Lage oder Schicht und aufeinanderfolgende Elemente benachbarter Schichten sind mit Vorteil gegeneinander geneigt angeordnet. Die Misch- bzw. Katalysatorelemente aufeinanderfolgender Lagen oder Schichten sind beispielsweise gegeneinander verdreht in der Kolonne befestigt.

Die Zwischenräume zwischen den Elementen im Kolonnenraum können ganz oder teilweise mit Füllstoff gefüllt sein oder es können Umlenkelemente oder Abschottungen vorgesehen sein, um das Fliess- bzw. Strömungsmaterial/-gut ganz oder in einem bestimmten Umfang durch die Kanäle der Elemente zu leiten, was bei Katalysatoranordnungen vorteilhaft ist. Es sind auch Anordnungen von Elementen denkbar, bei denen die Enden der Elemente aufeinanderfolgender Lagen - in Kolonnenrichtung betrachtet - überlappend angeordnet sind.

Die Kanäle der Elemente können parallel zueinander verlaufen, was nicht ausschliesst, dass sich der Querschnitt einzelner Kanäle verändert, z.B. periodisch verändert. Es ist auch denkbar, dass die Kanäle eines Elements gegeneinander wendelförmig verdreht sein können und /oder dass Kanäle - in Kolonnenrichtung betrachtet - in derselben oder in verschiedenen Ebenen im Kolonnenraum beginnen. Die Kanäle der Elemente können also - in Kolonnenrichtung betrachtet - in derselben oder in verschiedenen Ebenen in den Kolonnenraum münden bzw. auf derselben oder verschiedenen Ebenen im Kolonnenraum beginnen. Wesentlich bleibt immer, dass das Fliessgut immer wieder in den Kolonnenraum gelangt, bevor es in die Kanäle eines nachfolgenden Elements gelangt.

Die Elemente mit den Kanälen können aus Metall, Keramik, Porzellan, Glas oder Kunststoff oder aus einem Verbund aus mehreren solcher Werkstoffen bestehen. Die Katalysatormischelemente können als Wickelkörper hergestellt und entsprechend aufgebaut sein.

Bei der Entstickung von Rauchgasen wird beispielsweise NH₃ zum Reduzieren von NOₓ eindosiert und in der Katalysatorvorrichtung möglichst gleichmässig und vollständig zur Reaktion gebracht, so dass die Entstickung genau stöchiometrisch und vollständig erfolgen kann.

Eine Kolonne für die Entstickung von Rauchgas einer Kehrrichtverbrennungs- oder einer Kraftwerksanlage, d.h. beispielsweise zur Reduktion von NOₓ mit NH₃ enthält z.B. Katalysatorelemente mit einer Beschichtung von Oxyden von Erdalkalimetallen oder Übergangsmetallen.

Eine besonders günstige und vielseitige Ausführung besteht darin, die Kanalelemente mit einer katalytisch wirksamen Washcoatschicht zu versehen.

Die Erfindung wird nachstehend anhand der schematischen Zeichnungen erläutert.

Es zeigen:
- Fig. 1A: ein Element mit wabenartiger Struktur und Kanälen mit rechteckigem Querschnitt;
- Fig. 1B bis 1D: drei weitere Kanalstrukturen;
- Fig. 2: eine Anordnung von Elementen nach Fig. 1A in zwei Lagen in einer Kolonne;
- Fig. 3A und 3B: Seitenansichten weiterer schematischer Anordnungen der Elemente in Kolonnen;
- Fig. 4: eine Aufsicht auf einen Querschnitt durch eine Kolonne mit Elementen.
- Fig. 5: in einer schematischen Seitenansicht zwei aufeinanderfolgende Lagen mit gekreuzt angeordneten Elementen.
- Fig. 6: in einer schematischen Seitenansicht zwei aufeinander folgende Lagen mit plattenartigen Elementen, die miteinander Kolonnen-Teilräume bilden.

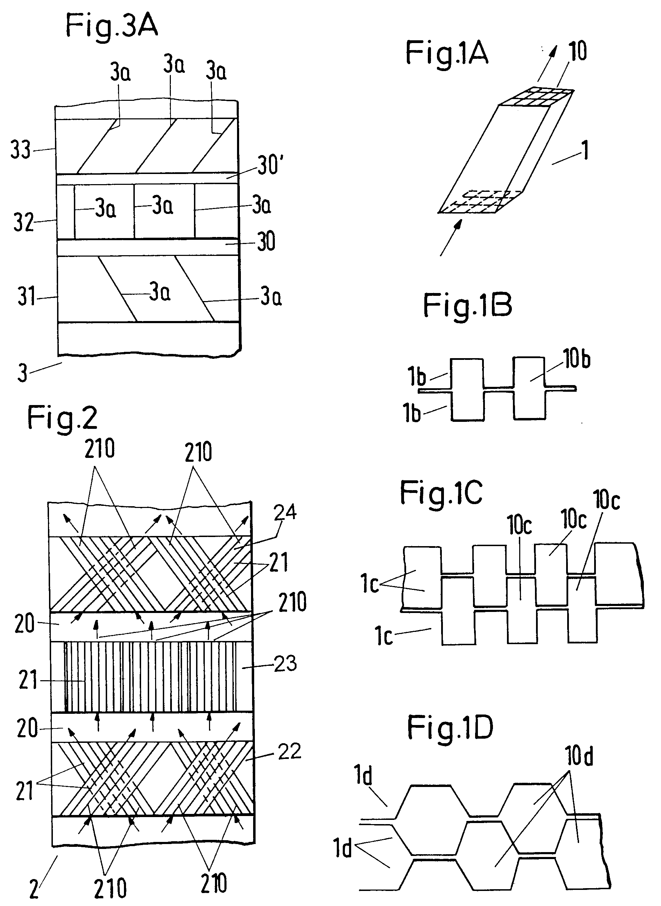

Das Element 1 von Fig. 1A hat die Form eines schiefen Prismas. Die Kanäle 10 im Element 1 haben einen quadratischen Querschnitt und verlaufen gerade und parallel.

Die Fig. 1B, 1C und 1D zeigen Beispiele anderer möglicher Querschnitte der Kanäle 10b, 10c, 10d. Derartig strukturierte Elemente könnten etwa durch Zusammenfügen strukturierter Platten 1b, 1c bzw. 1d gefertigt werden. Es ist aber auch möglich, solcherart strukturierte Elemente durch Extrusion zu erhalten.

In der schematischen Seitenansicht von Fig. 2 sieht man die Anordnung der Elemente 21 in der Kolonne 2 in Schichten oder Lagen 22, 23, 24. Beim Verlassen der Schichten oder Lagen 22, 23, 24 gelangt das Fliess- oder Mischgut (mit Pfeilen angedeutet) von den Kanälen 210 der Elemente 21 jeweils in den offenen Kolonnenraum 20. Die Elemente 21 in den Elementschichten 22, 23, 24 sind gegeneinader geneigt und die Lagen 22, 23, 24 wiederum sind gegeneinander winklig verdreht, im gezeigten Beispiel um jeweils einen Winkel von etwa 90°. Innerhalb einer einzelnen Lage 22, 23, 24 wiederum sind nebeneinander liegende Elemente 21 gegeneinander geneigt.

Der Kolonnenraum innerhalb der Lagen, d.h. der Raum der nicht in den Elementen, also ausserhalb der Kanäle liegt, kann ganz, nur teilweise oder überhaupt nicht von Fliessgut durchflossen werden. In den Fällen, wo Fliessgut diesen Raum durchfliesst, können die Aussenkonturen der Elemente 21 ebenfalls mischend und/oder katalysierend wirken. Es besteht aber auch die Möglichkeit, in diesen Räumen Füllkörper oder Schikanen für das Fliessgut anzubringen.

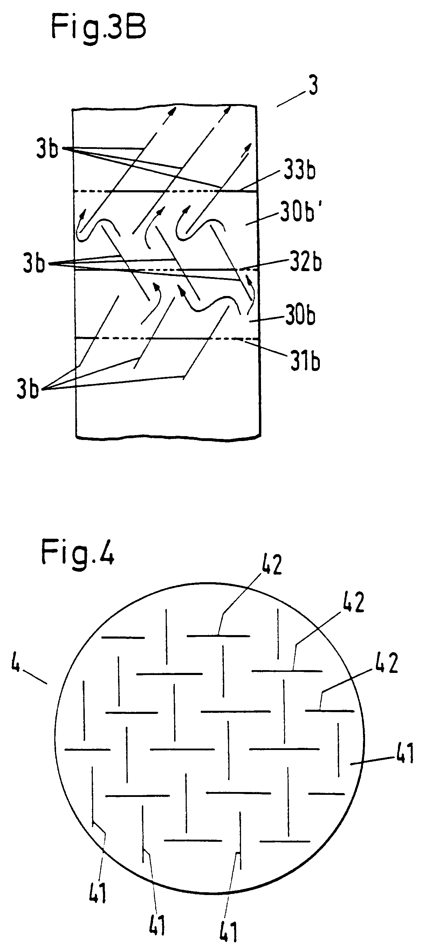

In den Seitenansichten der Fig. 3A und 3B von Kolonnen 3 mit weiteren Konfigurationen von Elementen sind die Elemente 3a bzw. 3b nur noch durch Geraden schematisiert.

Die Ausgänge der Kanäle der Elemente 3a der Schicht 31 von Fig. 3A münden beispielsweise nicht gegenüber den Eingängen der Kanäle der Elemente 3a der Schicht 32 in den Kolonnenraum 30. Hingegen münden die Ausgänge und die Eingänge der Kanäle der Elemente 3a der Schichten 32 bzw. 33 einander gegenüberliegend in den Kolonneraum 30'.

In Fig. 3B sind die Elemente 3b in Richtung der Kolonne 3 überlappend angeordnet. Dies zwingt das Fliessgut in mit den geschweiften Pfeilen angedeutete Wege in den Kolonnenräumen 30b und 30b', wenn beispielsweise die Lageböden 31b, 32b, 33b für das Fliessgut teilweise nicht oder nur wenig, oder unterschiedlich durchlässig sind. Mit verschiedenen Durchlässigkeiten der Lageböden für das Fliessgut sind jede Menge verschiedener Konstruktionen denkbar. Anhand von Fig. 3B soll lediglich das Prinzip erklärt werden.

Fig. 4 schliesslich zeigt den Querschnitt durch eine Kolonne 4 mit rechtwinklig gegeneinander verdrehten Elementen 41, 42. Dabei könnten die Elemente 41, 42 alle in einer Lage oder in verschiedenen Lagen in die Kolonne eingebaut sein. Genauso könnten im Kolonnenraum Füll-, Umlenkkörper oder Schikanen zum Beeinflussen des Fliessweges des Fliessgutes vorgesehen sein.

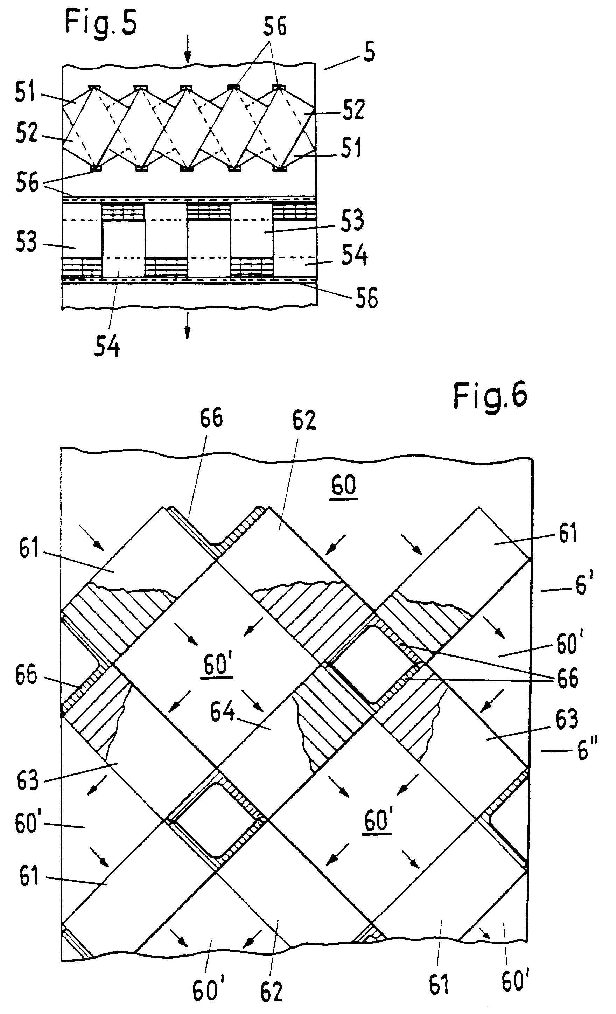

Fig. 5 zeigt eine Anordnung von plattenförmigen Elementen 51, 52, die winklig zueinander, in Reihen angeordnet eine Lage bilden. Die Lage baut sich aus einer Vielzahl derartige Elementreihen auf so dass der Querschnitt der Kolonne 5 durch die Lage vollständig abgedeckt ist. Die Elemente 53, 54 der nachfolgenden Schicht sind hier beispielsweise um 90° zueinander verdreht.

Die Elemente 51, 52, bzw. 53, 54 der einzelnen Lagen sind in einer Art von U-Profilen 56 eingelegt und festgehalten.

Das Anordnungsprinzip, von Fig. 6 schliesslich zeigt plattenförmige Elemente 61, 62, bzw. 63, 64, von zwei aufeinanderfolgenden Lagen. Je ein Element 61, 62, 63 und 64 bilden dabei einen Teilraum 60 des Kolonnenraums. In den Elementen sind die Kanäle so angeordnet, dass das Fliessgut durch die Kanäle der Elemente 61 und 62 der ersten Lage in den Teilraum 60 gelangt und durch die Kanäle der Elemente 63, 64 der nachfolgenden zweiten Lage in nachfolgende Teilräume 60' fliesst. Der Weg des Fliessguts ist mit Pfeilen dargestellt. Die Elemente sind mit den Winkelprofil-Trägern 66 in der Kolonne angebracht.

Das Element könnte auch als Wickelelement ausgebildet sein, das durch aufwickeln bzw. aufrollen einer strukturierten Platte entsteht und bei dem sich entsprechend der Struktur der gewickelten Platte beispielsweise auf einer Spirale angeordnete, Kanäle gebildet haben.

## Patentansprüche

1. Katalysatoranordnung in einer Kolonne (2) mit mindestens zwei aufeinanderfolgenden Lagen (22, 23, 24) und mindestens einem im Kolonnenraum liegenden Übergangsbereich (20) zwischen den Lagen, wobei die Lagen Kanalelemente (21) umfassen, die als Katalysatoren ausgebildete sind und jeweils eine Vielzahl von dicht angeordnete und zum Kolonnenraum hin offene Kanäle (210) aufweisen, und diese Kanalelemente zur Hauptströmungsrichtung geneigt sind, derart, dass das zu behandelnde Fliessgut jeweils in den Lagen durch die Kanalelemente in Teilströme getrennt werden, die über den Querschnitt hin und her verlagert werden, so dass sich in dem oder jedem Übergangsbereich eine Vermischung ergibt.

2. Anordnung nach Anspruch 1, bei der die Kanalelemente (21) in einem Winkelbereich von 20 bis 70° zur Hauptrichtung der Kolonne geneigt sind.

3. Anordnung nach Anspruch 1 oder 2, bei der aufeinanderfolgende Kanalelemente (21) in den Lagen (22, 23, 24) gegeneinander winkelig verdreht sind.

4. Anordnung nach einem der Ansprüche 1 bis 3, bei der Ende und Eingang aufeinanderfolgender Kanäle der Kanalelemente (21) in den Lagen (22, 23, 24) einander gegenüberliegend angeordnet sind.

5. Anordnung nach einem der Ansprüche 1 bis 4, bei der Ende und Eingang aufeinanderfolgender Kanäle (210) der Kanalelemente (21) in den Lagen (22, 23, 24) gegeneinander verschoben angeordnet sind.

6. Anordnung nach einem der Ansprüche 1 bis 5, bei der aufeinanderfolgender Kanalelemente (21), in Hauptrichtung betrachtet, überlappend angeordnet sind.

7. Anordnung nach einem der Ansprüche 1 bis 6, bei der die Kanalelemente (10a, 10b, 10c) platten- und/oder wabenartig ausgebildet sind.

8. Anordnung nach einem der Ansprüche 1 bis 6, bei der nebeneinander angeordnete Kanalelemente (21) in den Lagen (22, 23, 24) zueinander winkelig angeordnet sind.

9. Anordnung nach Anspruch 8, bei der die Kanalelemente (61, 62, 63, 64) von in Hauptrichtung aufeinanderfolgenden Lagen (6', 6'') und Kanalelemente (61, 62 bzw. 63, 64) innerhalb der Lagen (6' bzw. 6'') derart zueinanderangeordnet sind, dass sie zusammen einen weitgehend geschlossenen Teilraum (60') des Kolonnenraums (60) bilden und das Fliessgut über die Kanäle der den Teilraum begrenzenden Kanalelemente der einen Lage in diesen Teilraum eintritt und über die Kanäle der Kanalelemente der nachfolgenden Lage aus diesem Teilraum wieder austritt.

10. Anordnung nach einem der Ansprüche 1 bis 10, bei der die Kanäle (210) der Kanalelemente (21) parallel zueinander verlaufen.

11. Anordnung nach einem der Ansprüche 1 bis 10, bei der im Kolonnenraum (30b, 30b') zwischen den Kanalelementen (3b) einer Lage Füllkörper und/oder Schikanen (33b) angeordnet sind.

12. Anordnung nach einem der Ansprüche 1 bis 11, bei der die Oberfläche der Kanäle wenigstens teilweise eine katalytisch aktive Washcoatschicht aufweisen.

13. Rauchgasentstickungsanlage mit einer Katalysatoranordnung nach einem der Ansprüche 1 bis 12.

14. Lage einer Kolonne mit einer Katalysatoranordnung gemäss einem der Ansprüche 1 bis 12.

## Claims

1. Catalyst arrangement in a column (2) having at least two sequential layers (22, 23, 24) and at least one transition region (20) lying between the layers in the column space, with the layers having channel elements (21) which are formed as catalysers and which each have a plurality of tightly arranged channels (210) which are open towards the column space and with these channel elements being inclined to the main flow direction in such a way that the flowing material to be treated is in each case split up into partial flows in the layers by the channel elements, with the partial flows being displaced to and fro over the cross-section so that mixing results in the one or other transition region.

2. Arrangement in accordance with claim 1, wherein the channel elements (21) are inclined in an angular range of 20 to 70° to the main direction of the column.

3. Arrangement in accordance with claim 1 or claim 2, wherein sequential channel elements (21) in the layers (22, 23, 24) are turned so that they are angled to one another.

4. Arrangement in accordance with one of the claims 1 to 3, wherein the end and the inlet of sequential channels of the channel elements (21) are arranged so that they lie opposite one another in the layers (22, 23, 24).

5. Arrangement in accordance with one of the claims 1 to 4, wherein the end and the inlet of sequential channels (210) of the channel elements (21) in the layers (22, 23, 24) are arranged displaced relative to one another.

6. Arrangement in accordance with one of the claims 1 to 5, wherein sequential channel elements (21) are arranged to overlap when considered in the main direction.

7. Arrangement in accordance with one of the claims 1 to 6, wherein the channel elements (10a, 10b, 10c) are of plate-like or of honeycomb design.

8. Arrangement in accordance with one of the claims 1 to 6, wherein channel elements (21) arranged alongside one another in the layers (22, 23, 24) are arranged angled to one another.

9. Arrangement in accordance with claim 8, wherein the channel elements (61, 62, 63, 64) of layers (6', 6'') which follow one another in the main direction and channel elements (61, 62 or 63, 64) within the layers (6' and 6'' respectively) are so arranged relative to one another that they together form a substantially closed partial space (60') of the column space (60) and the flowable material enters via the channels of the channel elements of the one layer which bound the partial space into this partial space and emerge again from this partial space via the channels of the channel elements of the following layer.

10. Arrangement in accordance with one of the claims 1 to 10, wherein the channels (210) of the channel elements (21) extend parallel to one another.

11. Arrangement in accordance with one of the claims 1 to 10, wherein filling bodies and/or chicanes (33b) are arranged in the column space (30b, 30b') between the channel elements (3b) of a layer.

12. Arrangement in accordance with one of the claims 1 to 11, wherein the surface of the channels at least partly have a catalytically active washcoat layer.

13. Exhaust gas nitrogen-removal plant comprising a catalyst arrangement in accordance with one of the claims 1 to 12.

14. Layer of a column with a catalyst arrangement in accordance with one of the claims 1 to 12.

## Revendications

1. Dispositif catalyseur dans une colonne (2), comportant au moins deux couches (22, 23, 24) successives et au moins une zone de transition (20) située dans l'espace de la colonne, entre les couches, les couches comprenant des éléments formant canaux (21), réalisés sous forme de catalyseurs et présentant chacun une pluralité de canaux (210) disposés de façon dense et ouverts en direction de l'espace de colonne, et ces éléments formant canaux étant inclinés par rapport à la direction d'écoulement principal, de manière que le produit fluide à traiter soit chaque fois séparé dans les couches, au moyen des éléments formant canaux, en donnant des courants partiels déplacés dans un sens et dans l'autre sur l'aire de la section transversale, de manière à produire un mélange dans la, ou dans chaque, zone de transition.

2. Dispositif selon la revendication 1, dans lequel les éléments formant canaux (21) sont inclinés dans une plage angulaire allant de 20 à 70° par rapport à la direction principale de la colonne.

3. Dispositif selon la revendication 1 ou la revendication 2, dans lequel les éléments formant canaux (21) successifs se trouvant dans les couches (22, 23, 24) sont tournés les uns par rapport aux autres d'un certain angle

4. Dispositif selon l'une des revendications 1 à 3, dans lequel l'extrémité et l'entrée de canaux successifs des éléments formant canaux (21) se trouvant dans les couches (22, 23, 24) sont disposés à l'opposé les unes des autres.

5. Dispositif selon l'une des revendications 1 à 4, dans lequel l'extrémité et l'entrée de canaux (210) successifs des éléments formant canaux (21) se trouvant dans les couches (22, 23, 24) sont disposées de façon décalée les unes par rapport aux autres.

6. Dispositif selon l'une des revendications 1 à 5, dans lequel des éléments formant canaux (21) successifs sont disposés avec un chevauchement lorsqu'on observe dans la direction principale.

7. Dispositif selon l'une des revendications 1 à 6, dans lequel des éléments formant canaux (10a, 10b, 10c) sont réalisés à la façon de plaques et/ou de nids d'abeille.

8. Dispositif selon l'une des revendications 1 à 6, dans lequel des éléments formant canaux (21), disposés les uns à côté des autres, se trouvant dans les couches (22, 23, 24), sont disposés en faisant un angle les uns avec les autres.

9. Dispositif selon la revendication 8, dans lequel des éléments formant canaux (61, 62, 63, 64), venant de couches (6', 6'') se suivant dans la direction principale, et les éléments formant canaux (61, 62, respectivement 63, 64) se trouvant à l'intérieur des couches (6' respectivement, 6'') sont disposés les uns par rapport aux autres de manière à constituer conjointement un espace partiel (60') notablement fermé de l'espace de colonne (60), et le produit fluide entre dans l'espace partiel par une première couche, en passant par les canaux des éléments formant canaux, délimitant l'espace partiel, et ressort de cet espace partiel en passant par les canaux des éléments formant canaux de la couche subséquente.

10. Dispositif selon l'une des revendications 1 à 10 dans lequel les canaux (210) des éléments formant canaux (21) s'étendent parallèlement les uns aux autres.

11. Dispositif selon l'une des revendications 1 à 10, dans lequel des corps de remplissage et/ou des chicanes (33b) sont disposés dans l'espace de colonne (30b, 30b'), entre les éléments formant canaux (3b) d'une couche.

12. Dispositif selon l'une des revendications 1 à 11, dans lequel la surface des canaux présente au moins partiellement une couche de revêtement ondulé, catalytiquement actif.

13. Installation de dénitruration des gaz d'échappement, équipée d'un dispositif catalyseur selon l'une des revendications 1 à 12.

14. Couche de garnissage d'une colonne avec un dispositif catalyseur selon l'une des revendications 1 à 12.
